# EUROPÄISCHE PATENTANMELDUNG

(11) **EP 1 471 776 A1**
(43) Veröffentlichungstag der Anmeldung: **27.10.2004**
(21) Anmeldenummer: 03009253.0
(22) Anmeldetag: 23.04.2003
(51) Int. Cl.: H05B 37/02, F21S 10/04, G06F 7/58

(54) **Steuerungsvorrichtung für eine Leuchtvorrichtung**

(71) Anmelder: Suckfüll, Gerhard, D-97618 Niederlauer (DE); Räder, Siegesmund, 97616 Bad Neustadt (DE); Hückmann, Winfried, 97618 Hohenroth (DE)
(72) Erfinder: Rose, Michael, Ormond Beach, FL 32174 (US)
(74) Vertreter: Betten & Resch

(57) **Zusammenfassung**

Steuerungsvorrichtung zur Ansteuerung von einer oder mehereren Lampen oder Leuchtmitteln (120), wobei die Steuerungsvorrichtung aufweist: Eine Mikroprozessorschaltung, die so ausgebildet ist, daß sie ein Ausgangssignal zur Ansteuerung der ein oder mehreren Lampen oder Leuchtmittel ausgibt, wobei das Ansteuersignal entweder völlig aperiodisch ist oder eine Periodendauer aufweist, die so lang ist, daß das Signal vom menschlichen Betrachter nicht als periodisch erkannt wird.

## Beschreibung

Die vorliegende Erfindung betrifft eine Steuerungsvorrichtung zur Ansteuerung von einer oder mehreren Lampen oder Leuchtmitteln.

Steuerungsvorrichtungen für Lampen sind seit langem bekannt, wobei abhängig von den Randbedingungen und gewünschten Ergebnissen ganz unterschiedliche Steuerungsvorrichtungen im Einsatz sind. Sie reichen vom einfachen Schalter, mit dem eine Lampe ein- oder ausgeschaltet werden kann, bis zu relativ komplexen Steuerungsvorrichtungen, beispielsweise bei Lichtorgeln, wo abhängig von äußeren Parametern die Ansteuerung von Lampen durchgeführt wird.

Ausgehend vom Stand der Technik ist es eine Aufgabe der vorliegenden Erfindung, eine Steuerungsvorrichtung zur Ansteuerung von einer oder mehreren Lampen oder Leuchtmitteln zu schaffen, die für den Betrachter den Eindruck erweckt, als würde die angesteuerte Lampe auf eine natürliche Art und Weise "flackern".

Die Aufgabe der Erfindung wird im wesentlichen dadurch gelöst, daß eine Steuerungsvorrichtung eine Mikroprozessorschaltung aufweist, deren Ausgangssignal entweder völlig aperiodisch ist oder eine Periodendauer aufweist, die so lang ist, daß das Ansteuersignal vom menschlichen Betrachter nicht als periodisch erkannt wird.

Mit einer derartigen Steuerungsvorrichtung läßt sich ein "natürlicher" Flackereffekt erzeugen, der beim Betrachter den Eindruck erweckt, die Lampe oder das Leuchtmittel würde wie eine Kerze im Wind "flackern".

Mit einer derartigen Ansteuerungsschaltung lassen sich auf besonders vorteilhafte Weise elektronisch betriebene Kerzen ansteuern, beispielsweise in Form einer Tischkerze, eines Windlichts, oder eines Grablichts. Für den Betrachter entsteht damit der Eindruck eines "natürlichen Flackerns im Wind", so daß eine Unterscheidung zwischen elektronischem Licht und natürlichem Kerzenlicht kaum noch möglich ist. Dies gilt insbesondere dann, wenn aufgrund der besonderen Ausgestaltung des Leuchtmittels - beispielsweise als Windlicht oder als Grablicht - auch im Falle einer natürlichen Kerze die Flamme selbst nicht erkennbar wäre, sondern nur das Flackern der von ihr verursachten Helligkeit.

Gemäß einem bevorzugten Ausführungsbeispiel wird die Mikroprozessorschaltung von einem zugehörigen Programm angesteuert, das eine sich wiederholende Schleife umfaßt, in der nach einem vorbestimmten Muster ein Register des Mikroprozessors unterschiedliche Werte durchläuft. Immer dann, wenn die Registerwerte bestimmte vordefinierte Werte einnehmen, wird das Leuchtmittel für eine dem Registerwert entsprechende Zeit eingeschaltet.

Mit einer derartigen Ansteuerschaltung läßt sich auf besonders einfache Weise ein Flackereffekt erzeugen.

Vorzugsweise werden die Registerwerte, bei denen eine Ansteuerung zum Einschalten des Leuchtmittels erfolgt, so gewählt, daß das Ansteuersignal einen möglichst "irregulären" Eindruck beim Betrachter erzeugt. Damit kann auf besonders effektive Weise der Eindruck eines "Flackereffekts" erzeugt werden.

Gemäß einem bevorzugten Ausführungsbeispiel wird ein Registerwert von einem Basiswert bis zu einem Schwellenwert in vordefinierten Zwischenschritten durchlaufen, wobei bei bestimmten vordefinierten Zwischenschritten eine Differenz zwischen dem jeweiligen Registerwert und einem zugeordneten vordefinierten Wert gebildet wird. Der Differenzwert dient dann zur Ansteuerung der Einschaltzeit des Leuchtmittels.

Auf diese Art und Weise läßt sich besonders effektiv der irreguläre Effekt des ausgegebenen Ansteuersignals erzeugen, indem die Zwischenwerte, bei denen die Differenz gebildet wird, sowie die zu subtrahierenden Werte so gewählt werden, daß ein regulärer oder periodischer Eindruck des Ansteuersignals vermieden wird.

Gemäß einem weiteren Ausführungsbeispiel wird der irreguläre oder aperiodische Eindruck des Ansteuersignals unter Verwendung eines Zufallsgenerators erzeugt, der wiederholt Zufallszahlen generiert, die dann zur Definition der Einschaltzeit des anzusteuernden Leuchtmittels dienen. Auf diese Weise kann der Eindruck eines periodischen Ansteuersignals vollständig vermieden werden.

Gemäß einem weiteren bevorzugten Ausführungsbeispiel umfaßt die Ansteuerschaltung mehrere Ausgabeanschlüsse zur Ansteuerung von mehreren Leuchtmitteln. Damit lassen sich dann komplexe Beleuchtungsvorrichtungen mit mehreren Beleuchtungseinheiten realisieren, wie beispielsweise Adventskränze, Girlanden, etc.

Besonders vorteilhaft ist es dabei, wenn für die mehreren Ausgabeanschlüsse jeweils unabhängig voneinander eine Schleife zur Ansteuerung der Leuchtmittel ausgeführt wird, so daß für alle angesteuerten Leuchtmittel unabhängig voneinander der Eindruck einer aperiodischen Ansteuerung entsteht.

Gemäß einem weiteren bevorzugten Ausführungsbeispiel umfaßt die Ansteuerschaltung eine Auswahleinrichtung zur Auswahl der Frequenz oder der zeitlichen Häufigkeit, mit der die Leuchtmittel ein- oder ausgeschaltet werden. Dies kann beispielsweise dadurch realisiert werden, daß die Taktfrequenz, mit der die Schleife durchlaufen wird, variiert wird, und zwar abhängig von den Eingaben des Benutzers. Damit kann dann eine relativ schnelle Wiederholung der Schleife (kurze Periodendauer) oder eine langsame Wiederholung der Schleife realisiert werden.

Gemäß einem weiteren bevorzugten Ausführungsbeispiel umfaßt die Ansteuerschaltung einen Helligkeitssensor, in Abhängigkeit von dessen Signal die Ansteuerschaltung die Leuchtmittel entweder ansteuert oder nicht. Damit kann beispielsweise in sehr hellen Umgebunden, wenn das Leuchtmittel ohnehin nicht gut zu erkennen wäre, die Ansteuerung unterbunden werden und damit Strom gespart werden, was insbesondere beim Batteriebetrieb vorteilhaft ist.

Gemäß einem weiteren Ausführungsbeispiel umfaßt die Ansteuerschaltung einen Schalter zur Auswahl von einem oder mehreren der Leuchtmittel, die durch die Ansteuerschaltung angesteuert werden sollen. Damit kann dann auf variable Weise eine Leuchtvorrichtung bedient werden, die aus mehreren einzelnen Leuchtvorrichtungen besteht.

Die vorliegende Erfindung wird nun unter Bezugnahme auf die beiliegenden Zeichnungen im Detail beschrieben. Es zeigen:

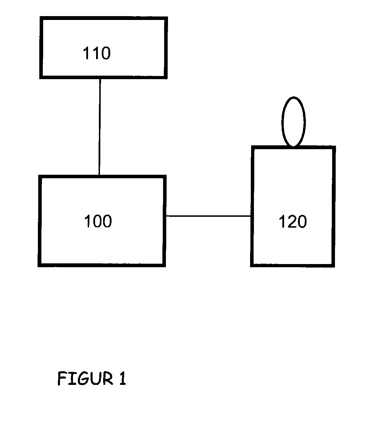

Fig. 1 illustriert schematisch einen Blockschaltplan gemäß einem Ausführungsbeispiel der vorliegenden Erfindung;
Fig. 2 illustriert schematisch ein Flußdiagramm für ein Steuerungsverfahren gemäß einem Ausführungsbeispiel der vorliegenden Erfindung;
Fig. 3 illustriert schematisch ein Flußdiagramm für ein Steuerungsverfahren gemäß einem weiteren Ausführungsbeispiel der vorliegenden Erfindung;
Fig. 4 illustriert schematisch ein Blockschaltbild gemäß einem weiteren Ausführungsbeispiel der vorliegenden Erfindung;
Fig. 5 illustriert schematisch ein Blockschaltbild gemäß einem weiteren Ausführungsbeispiel der vorliegenden Erfindung;
Fig. 6 illustriert schematisch ein Blockschaltbild gemäß einem weiteren Ausführungsbeispiel der vorliegenden Erfindung;
Fig. 7 illustriert schematisch eine Ausgestaltung einer Leuchtvorrichtung gemäß einem Ausführungsbeispiel der vorliegenden Erfindung;
Fig. 8 illustriert schematisch eine Ausgestaltung einer Leuchtvorrichtung gemäß einem weiteren Ausführungsbeispiel der vorliegenden Erfindung;

Der Mikroprozessor 100 wird betrieben gemäß einem in einem Speicher 110 abgelegten Programm. In Abhängigkeit davon wird über einen Ausgabeanschluß 115 des Mikroprozessors eine Leuchtvorrichtung 120 angesteuert. Bei der Leuchtvorrichtung kann es sich beispielsweise um eine Leuchtdiode, eine elektrische Glühlampe oder ähnliches handeln. Der Mikroprozessor gibt ein Ansteuersignal über seinen Ausgabeanschluß 115 aus, das entweder den Wert "1 " oder "0" annimmt. Abhängig davon wird dann die Leuchtvorrichtung 120, die gegebenenfalls noch eine zusätzliche Spannungsversorgungsschaltung aufweist, ein- und ausgeschaltet.

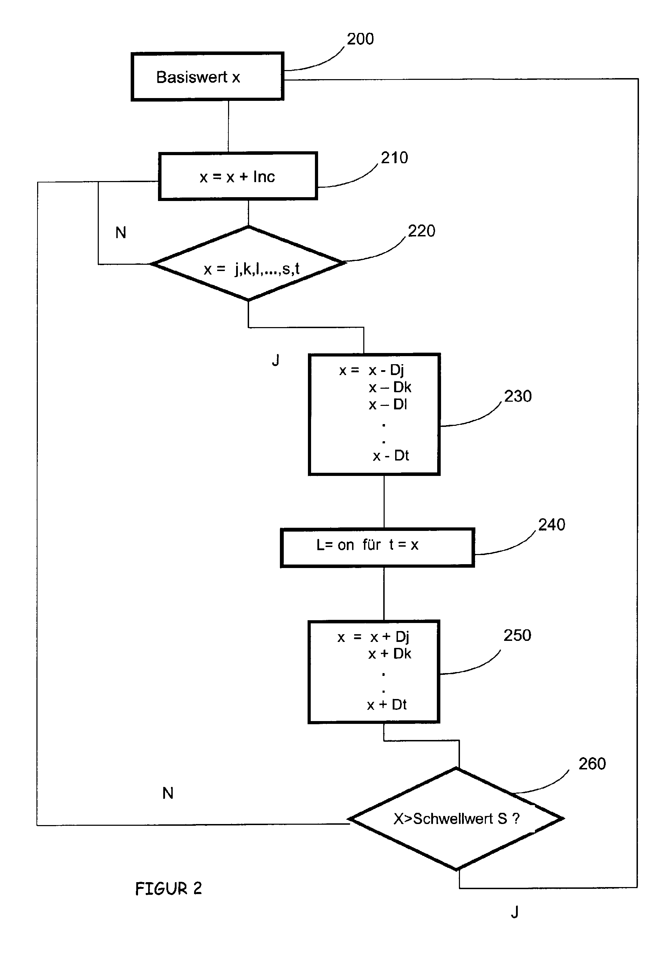

Die Ansteuerung selbst wird nun unter Bezugnahme auf Fig. 2 beschrieben. Fig. 2 zeigt schematisch ein Flußdiagramm eines Programms, das zur Ansteuerung der Leuchtmittel 120 verwendet werden kann.

Das Programm ist im Prinzip als Schleife aufgebaut. Ausgehend von einem Basiswert X (Schritt 200) wird dieser in Schritt 210 um einen Inkrementierwert I_{nc} inkrementiert. Der Inkrementierwert kann dabei 1 sein, kann aber auch einen anderen Wert annehmen.

Im Schritt 220 wird dann überprüft, ob der inkrementierte X-Wert einen von mehreren vordefinierten Werten annimmt. Ist dies der Fall, so wird von dem X-Wert ein zugeordneter zu subtrahierender Differenzwert abgezogen. So gehört beispielsweise zum Zwischenwert y der zugeordnete zu subtrahierende Wert D_{y}. Nach erfolgter Subtraktion ergibt sich ein Wert X, der dann im Register gespeichert wird (Schritt 230) und in Schritt 240 zur Ansteuerung des Leuchtmittels verwendet wird. Hierzu wird dann das Ausgabesignal bzw. ein zugeordneter Wert im Mikroprozessor L auf "1" gesetzt, und zwar für eine Zeit t, die dem Wert X entspricht. Danach wird die Subtraktion im Schritt 250 wieder rückgängig gemacht.

In der Abfrage 260 wird dann geprüft, ob die Schleife inzwischen den Schwellwert S erreicht hat. Ist dies nicht der Fall, so wird zu Schritt 210 zurückgekehrt und der nächste Inkrementierungsschritt durchgeführt.

Ist allerdings der Schwellwert S erreicht, so läuft die Schleife zurück zum Startpunkt 200, d. h. der Registerwert X wird wieder auf seinen Basiswert initialisiert.

Mit einem derartigen Programm kann auf vergleichsweise einfache Art und Weise ein sehr natürlich wirkender Flackereffekt erzeugt werden. Dies kann dadurch geschehen, daß die zu subtrahierenden Werte j, k, I, ..., s, t möglichst so gewählt werden, daß der damit erzielte Differenzwert bzw. die in Folge des Durchlaufs der Schleife sich wiederholenden Differenzwerte einen möglichst irregulären Eindruck machen. Entscheidend ist, daß dabei jegliche Periodizität vermieden wird.

Das Vermeiden der Periodizität kann leicht dadurch erreicht werden, daß die zu subtrahierenden Werte geeignet gewählt werden, obwohl der Registerwert X selbst eigentlich am Anfang und am Ende der Schleife jeweils periodisch ist, d. h. durch einfache Inkrementierung von einem Basiswert zu einem Schwellwert läuft. Dieser einfache Durchlauf wird jedoch durchbrochen durch die Subtraktion der irregulär gebildeten Differenzwerte, wodurch dann ein irreguläres, aperiodisches und einen natürlichen Flackereffekt erzeugendes Ansteuersignal erreicht wird.

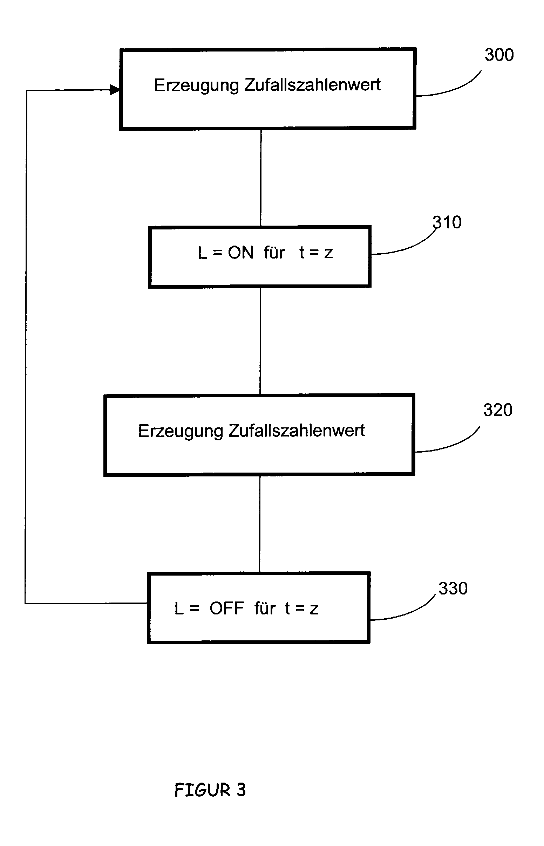

Ein weiteres Beispiel für ein Programm zur Ansteuerung des Leuchtmittels ist schematisch in Fig. 3 in Form eines Flußdiagramms dargestellt. Dabei wird davon ausgegangen, daß die Mikroprozessorschaltung eine Möglichkeit zur Erzeugung von Zufallszahlenwerten beinhaltet.

In einem Schritt 300 wird ein erster Zufallszahlenwert Z erzeugt, für eine Zeit t, die diesem Wert entspricht, wird dann der Ausgabeanschluß, mit dem das Leuchtmittel angesteuert wird, auf "1" gesetzt (Schritt 310).

Es wird dann in Schritt 320 ein erneuter Zufallszahlenwert Z erzeugt, in Schritt 330 wird dann das Leuchtmittel für eine entsprechende Zeit t ausgeschaltet bzw. der Ausgabeanschluß auf "0" gesetzt. Danach kehrt die Schleife wieder zum Anfangspunkt (Schritt 300) zurück.

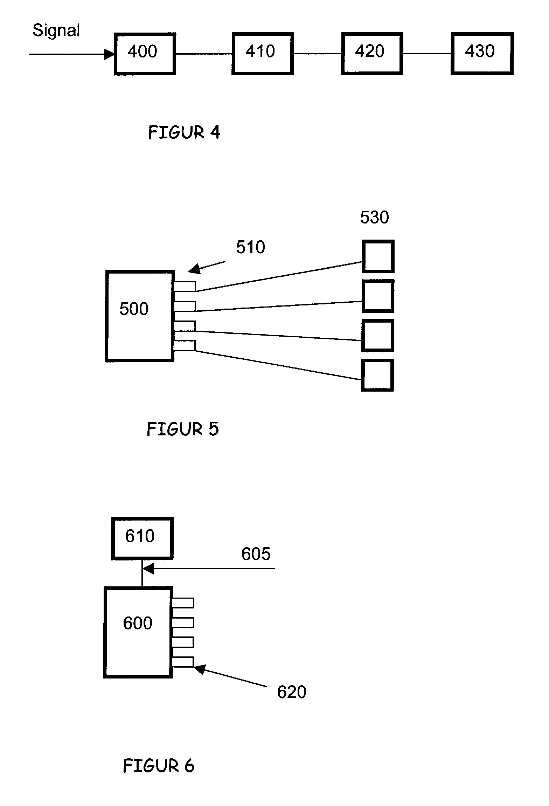

Fig. 4 illustriert schematisch die Serienschaltung von mehreren Leuchtmitteln 400, 410, 420 und 430. Alle werden gemeinsam von einem Ansteuerungssignal angesteuert. Dies kann beispielsweise sinnvoll sein im Falle der Ausgestaltung der Leuchtmittel in Form eines Adventskranzes, wo alle vier Kerzen auf dieselbe Weise angesteuert werden.

Ein weiteres Ausführungsbeispiel illustriert schematisch Fig. 5. Dabei handelt es sich um einen Mikroprozessor 500, der mehrere Ausgabeanschlüsse 510 aufweist. An jeden dieser Ausgabeanschlüsse kann ein Leuchtmittel 530 angeschlossen werden, die dann in voneinander unabhängig ablaufenden Ansteuerschleifen angesteuert werden.

Gemäß dem Ausführungsbeispiel, das in Fig. 6 gezeigt wird, umfaßt der Mikroprozessor 600 dabei einen Eingabepin 605, der mit einem Schalter 610 verbunden ist. Abhängig von der Häufigkeit, mit der der Schalter 610 gedrückt wird, werden dann mehrere Ausgabepins 620 des Mikroprozessors in voneinander unabhängiger Weise angesteuert, d. h. es läuft dann für jeden Ausgabepin 620 des Mikroprozessors eine separate Ansteuerschleife, wie sie beispielsweise unter Bezugnahme auf Fig. 2 oder Fig. 3 beschrieben wurde.

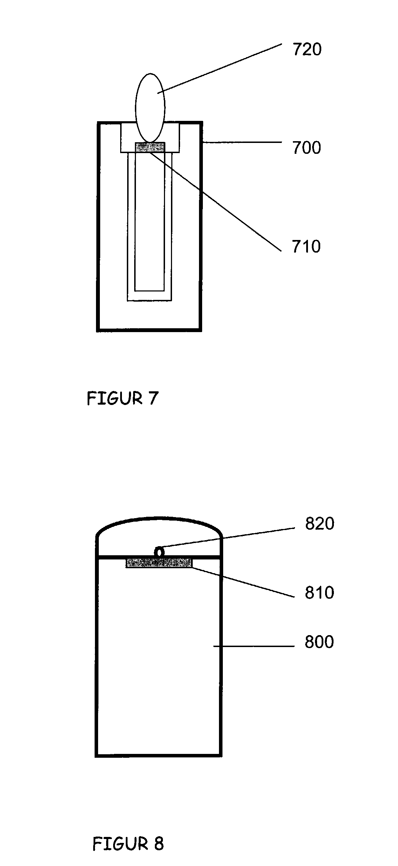

Die Leuchtmittel, die von der Ansteuervorrichtung angesteuert werden, können selbst auf die unterschiedlichste Art und Weise ausgebildet sein. Gemäß einem Ausführungsbeispiel handelt es sich bei den Leuchtmitteln um eine Vorrichtung in Kerzenform, wie sie in Fig. 7 schematisch dargestellt ist. Die Kerze 700 enthält dabei im Inneren die Ansteuerschaltung 710, die das Leuchtmittel 720 (beispielsweise eine LED) ansteuert. Auch die Batterie, die die Ansteuerschaltung 710 betreibt, ist dabei vorzugsweise im Körper der Kerze untergebracht.

Es ist dabei noch anzumerken, daß die Ausgestaltung der Ansteuerschaltung in der Form, daß möglichst aperiodisch und unregelmäßig das Leuchtmittel an- und ausgeschaltet wird, auch einen erheblichen Stromspareffekt aufweist. Damit lassen sich beispielsweise elektronische Beleuchtungen leichter im Batteriebetrieb speisen, als wenn permanent die Lampen eingeschaltet sind oder auf sehr einfache und simple "Blinkweise" ein- und ausgeschaltet werden. Insgesamt läßt sich mit dem Ansteuermechanismus gemäß Ausführungsbeispielen der vorliegenden Erfindung ein erhebliche Stromspareffekt und somit ein möglicher Batteriebetrieb für viele Leuchtvorrichtungen erzielen.

Ein weiteres Ausführungsbeispiel der vorliegenden Erfindung ist schematisch in Fig. 8 dargestellt. Es handelt sich dabei um eine Leuchtvorrichtung, die eine Ansteuervorrichtung 810 gemäß einem Ausführungsbeispiel der vorliegenden Erfindung enthält, wobei die Leuchtvorrichtung insgesamt als elektronisches Grablicht ausgebildet ist. Da das Licht 820 selbst bei einem derartigen Grablicht von einem Korpus 800 bzw. einer halbdurchsichtigen Abdeckung umgeben ist, kann in einem solchen Fall ein extrem natürlicher "Flackereffekt" erzielt werden.

Weitere Ausführungsbeispiele umfassen beispielsweise die Ausbildung von elektronischen Leuchtvorrichtungen als Lichterkette, als elektronische Girlande oder als Tischleuchte, wobei jeweils an derartige Leuchtvorrichtungen Ansteuervorrichtungen gemäß Ausführungsbeispielen der vorliegenden Erfindung angeschlossen oder in diesen enthalten sind. Gemäß weiteren Ausführungsbeispielen können die Leuchtvorrichtungen beispielsweise auch als Unterwasserlicht, als elektronisches Kaminfeuer, oder als elektronische Fackel ausgebildet sein. Sie können auch zu Zwecken des Lichtdesigns in Räumen angebracht werden beispielsweise als Dekken- und Wandbeleuchtungen, oder auch an Objekten wie beispielsweise Möbelstücken. Als weitere Verwendung ist beispielsweise eine Ausgestaltung in Form von Werbemitteln vorstellbar, zum Beispiel als Displays, als Werbeartikel, oder auch in Form von Postkarten, wobei die Leuchtvorrichtung dann auf eine Postkarte angebracht wäre.

## Patentansprüche

1. Steuerungsvorrichtung zur Ansteuerung von einer oder mehreren
Lampen oder Leuchtmitteln, wobei die Steuerungsvorrichtung aufweist:
Eine Mikroprozessorschaltung, die so ausgebildet ist, daß sie ein Ausgangssignal zur Ansteuerung der ein oder mehreren Lampen oder Leuchtmittel ausgibt, wobei das Ansteuersignal entweder völlig aperiodisch ist oder eine Periodendauer aufweist, die so lang ist, daß das Signal vom menschlichen Betrachter nicht als periodisch erkannt wird.

2. Steuerungsvorrichtung nach Anspruch 1, welche aufweist:
Eine in der Mikroprozessorschaltung ablaufende sich wiederholende Schleife, in der nach einem vordefinierten Muster ein Register des Mikroprozessors unterschiedliche Werte durchläuft, wobei dann, wenn die Registerwerte bestimmte vordefinierte Werte annehmen, das Leuchtmittel für eine dem Registerwert entsprechende Zeit eingeschaltet wird.

3. Verfahren nach Anspruch 2, wobei die Registerwerte, bei denen eine
Ansteuerung zum Einschalten des Leuchtmittels erfolgt, so gewählt sind, daß ein irregulärer Eindruck beim Betrachter erzeugt wird.

4. Steuerungsvorrichtung nach Anspruch 2 oder 3, wobei die Schleife folgendes aufweist:
Eine sich wiederholende Inkrementierung eines Registerwerts von einem Basiswert bis zu einem Schwellenwert, wobei bei vordefinierten Zwischenschritten des Registerwerts eine Differenz zwischen dem Registerwert und einem dem jeweiligen Zwischenwert zugeordneten weiteren vordefinierten Wert gebildet wird,
wobei der Differenzwert dann zur Ansteuerung der Einschaltzeit des Leuchtmittels verwendet wird.

5. Ansteuerschaltung nach einem der vorhergehenden Ansprüche, welche aufweist:
Einen Zufallsgenerator zur Erzeugung eines Zufallszahlenwerts, wobei der Zufallszahlenwert zur Definition der Einschaltzeit des anzusteuernden Leuchtmittels dient, und wobei wiederholt Zufallszahlenwerte genannt werden, die dann erneut zur Ansteuerung der Einschaltzeit bzw. der Ausschaltzeit des Leuchtmittels dienen.

6. Ansteuerschaltung nach einem der vorhergehenden Ansprüche, welche aufweist:
mehrere Ausgabeanschlüsse zur Ansteuerung von mehreren Leuchtmitteln.

7. Ansteuerschaltung nach Anspruch 6, welche ferner aufweist:
Mehrere von dem Mikroprozessor ausgeführte Schleifen zur
Ansteuerung von mehreren Leuchtmitteln unabhängig voneinander.

8. Ansteuerschaltung nach einem der vorhergehenden Ansprüche, welche aufweist:
eine Auswahleinrichtung zur Auswahl der Frequenz oder zeitlichen Häufigkeit, mit der die eine oder mehreren Leuchtmittel ein- oder ausgeschaltet werden.

9. Ansteuerschaltung nach einem der vorhergehenden Ansprüche,
welche ferner eines oder mehrere der folgenden Merkmale aufweist:
Einen Helligkeitssensor, in Abhängigkeit von dessen Signal die Ansteuerschaltung entweder die Leuchtmittel ansteuert oder nicht;
einen Schalter zum Ein- und Ausschalten der Ansteuerschaltung;
einen Schalter zur Auswahl von einem oder mehreren der anzusteuernden Leuchtmittel.

10. Elektronische Leuchtvorrichtung, welche aufweist:
eine Ansteuervorrichtung gemäß einem der vorhergehenden Ansprüche;
mindestens ein Leuchtmittel, das von der Ansteuervorrichtung angesteuert wird;
wobei ferner die Leuchtvorrichtung in einer der folgenden Ausgestaltungen ausgebildet ist:
als elektronische Kerze;
als elektronisches Grablicht;
als Lichterkette;
als elektronische Girlande.
als Tischleuchte;
als Unterwasserlicht;
als elektronisches Kaminfeuer;
als elektronische Fackel.
